# EUROPÄISCHE PATENTSCHRIFT

(11) **EP 2 222 386 B1**
(45) Veröffentlichungstag und Bekanntmachung des Hinweises auf die Patenterteilung: **30.03.2011**
(21) Anmeldenummer: 08857444.7
(22) Anmeldetag: 04.12.2008
(51) Int. Cl.: B01D 46/52

(54) **FILTEREINRICHTUNG ZUR FILTRATION GASFÖRMIGER FLUIDE, INSBESONDERE LUFTFILTER FÜR BRENNKRAFTMASCHINEN**
FILTER UNIT FOR THE FILTRATION OF GASEOUS FLUIDS, IN PARTICULAR AIR FILTER FOR INTERNAL COMBUSTION ENGINES
DISPOSITIF DE FILTRATION SERVANT À LA FILTRATION D'UN FLUIDE GAZEUX, EN PARTICULIER FILTRE À AIR POUR DES MOTEURS À COMBUSTION INTERNE

(30) Priorität: 07.12.2007 US 12290
(43) Veröffentlichungstag der Anmeldung: 01.09.2010
(73) Patentinhaber: Mann + Hummel GmbH, 71638 Ludwigsburg (DE)
(72) Erfinder: DACKAM, Cedric, 91207 Lauf an der Pegnitz (DE); JASNIE, Jasris, Kalamazoo Michigan 49009 (US)
(86) Internationale Anmeldenummer: PCT/EP2008/066791
(87) Internationale Veröffentlichungsnummer: WO 2009/071626

(56) Entgegenhaltungen:
- WO-A-00/50149
- WO-A-97/40917
- WO-A-2008/125475

## Beschreibung

### Technisches Gebiet

Die Erfindung bezieht sich auf eine Filtereinrichtung zur Filtration gasförmiger Fluide, insbesondere auf Luftfilter in Brennkraftmaschinen nach dem Oberbegriff des Anspruches 1.

### Stand der Technik

Aus der WO 97/40917 A1 ist ein Filter bekannt, der durch eine Wicklung eines Filtermediums, bestehend aus einer Glattlage und einer Welllage, gebildet ist. Aus der WO 00/750149 A1 ist ein Filter bekannt, der durch eine Wicklung eines Filtermediums, bestehend aus einer Glattlage und einer Welllage, um einen Kern gebildet ist, wobei auf der Abströmseite ein Stützgitter angeordnet ist.
In der US 6 966 940 B2 wird ein Luftfilter beschrieben, der zur Filtration der Verbrennungsluft in den Ansaugtrakt einer Brennkraftmaschine integriert ist. Das Filterelement des Luftfilters ist als Wickelfilter ausgeführt, der aus einer spiralförmig gewickelten Filterbahn besteht, wobei die Filterbahn gewellt ausgebildet ist, so dass in Achsrichtung des Filterelementes Luftströmungskanäle gebildet sind. Die Luftströmungskanäle sind im Bereich ihrer axialen Stirnseiten wechselseitig offen bzw. verschlossen, so dass an der axialen Anströmseite des Filterelementes nur jeder zweite Strömungskanal für die Einströmung der zu filtrierenden Verbrennungsluft geöffnet ist, wobei die anströmseitig offenen Strömungskanäle an der axialen Abströmseite verschlossen sind. Die Verbrennungsluft muss daher innerhalb des Filterelementes die jeden Strömungskanal begrenzenden Wandungen radial durchströmen, bevor eine axiale Abströmung aus dem benachbarten Strömungskanal möglich ist.

Zur Herstellung des Filterelementes wird die gewellte Filterbahn spiralförmig um einen Stützkern gewickelt, der dem Filterelement Stabilität verleiht. Unmittelbar an der Außenwandung des Stützkerns anliegende Abschnitte der Filterbahn werden mit dem Stützkern verklebt.

Der Stützkern beeinflusst die Strömung der axial aus Filterelement abströmenden Verbrennungsluft. Der Stützkern erzeugt in der abströmenden Luft Verwirbelungen, die die laminare Strömung beeinträchtigen. Hierdurch können Messergebnisse eines Luftmassenmessers beeinträchtigt werden, der zur Feststellung der durchgesetzten Luftmasse stromab des Filterelementes im Ansaugtrakt angeordnet ist. Die Beeinträchtigung der Messergebnisse äußert sich als erhöhtes Messrauschen.

Der Erfindung liegt die Aufgabe zugrunde, eine Filtereinrichtung zur Filtration gasförmiger Fluide, die mit einer um einen Stützkern spiralförmig geführten Filterbahn versehen ist, mit einfachen konstruktiven Maßnahmen so auszubilden, dass an der Abströmseite des Filterelementes Verwirbelungen möglichst vermieden werden.

### Offenbarung der Erfindung

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung dient zur Filtration gasförmiger Fluide und wird insbesondere als Luftfilter in Brennkraftmaschinen zur Filtration der der Brennkraftmaschine zuzuführenden Verbrennungsluft eingesetzt. Grundsätzlich kommt aber auch ein Einsatz bei der Filtration sonstiger gasförmiger Fluide in Betracht, beispielsweise der dem Fahrzeuginnenraum zuzuführenden Luft.

Die Filtereinrichtung weist ein Filterelement auf, das aus einer um einen Stützkern spiralförmig gewickelten Filterbahn besteht, so dass parallel verlaufende Strömungskanäle für das Fluid im Filterelement gebildet sind. Beispielsweise kann die Filterbahn eine gewellte Struktur aufweisen, wobei unmittelbar benachbarte Wellentäler und Wellenberge jeweils einen in Achsrichtung verlaufenden Strömungskanal bilden. Die Strömungskanäle sind wechselseitig an den axialen Stirnseiten offen bzw. verschlossen ausgebildet, derart, dass ein erster Strömungskanal an der axialen Anströmseite offen und an der gegenüberliegenden axialen Abströmseite geschlossen und ein zweiter, benachbarter Strömungskanal an der axialen Anströmseite geschlossen und an der gegenüberliegenden axialen Abströmseite geöffnet ist. Auf diese Weise gelangt über eine begrenzte Anzahl von Strömungskanälen das gasförmige Fluid in das Innere des Filterelementes, wo ein radialer Übertritt über die Wandungen der Strömungskanäle in die unmittelbar benachbarten Strömungskanäle stattfindet. Über diese zweiten Strömungskanäle, die anströmseitig geschlossen und abströmseitig geöffnet sind, kann das gereinigte gasförmige Fluid aus dem Filterelement axial abströmen.

Erfindungsgemäß sind diejenigen Strömungskanäle, die unmittelbar benachbart zum Stützkanal angeordnet sind und deren axiale Abströmseite offen ausgebildet ist, von einem zusätzlichen Abdeckelement an der Abströmseite abgedeckt, das mit einem Bauteil der Filtereinrichtung verbunden ist. Das Abdeckelement sorgt dafür, dass die Abströmung über die direkt an dem Stützkern gelegenen Abströmkanäle vollständig unterbunden ist, so dass das gasförmige Fluid aus diesen unmittelbar zum Stützkern benachbarten Strömungskanälen radial weiter nach außen durch die Wandung hindurchtreten muss bis zum Erreichen von Strömungskanälen, welche an der Abströmseite axial geöffnet und nicht von dem Abdeckelement überdeckt sind.

Auf diese Weise wird zwar der zentrische Bereich vergrößert, in welchen keine axiale Abströmung aus dem Filterelement stattfindet. Zugleich wird aber die Abströmung in radial weiter außen gelegenen Strömungskanälen verstärkt, wodurch die Gefahr von Turbulenzen bzw. Verwirbelungen reduziert und mit höherer Sicherheit eine laminare, axiale Strömung gewährleistet ist. Auf diese Weise können Messergebnisse eines die Strömungsrate stromab des Filterelementes messenden Sensors verbessert und das Messrauschen dieses Sensors verringert werden. Der Durchsatz durch das Filterelement wird durch das Abdeckelement nicht oder zumindest nicht signifikant beeinträchtigt. Insgesamt wird eine annähernd ringförmige, laminare Abströmung des das Filterelement passierenden Fluids erzielt.

Das Abdeckelement bietet insbesondere für den Fall Vorteile, dass die Filterbahn des Filterelementes unmittelbar an die Außenwand des Stützkerns angeklebt ist. Der Klebstoff zwischen Filterbahn und Stützkern beeinträchtigt die axiale Strömung durch die unmittelbar an der Außenwand gelegenen Strömungskanäle, was jedoch aufgrund des Abdeckelementes, das diese Strömungskanäle an der Abströmseite überdeckt, ohne Einfluss auf die Abströmung des Fluids bleibt, da die Fluidströme in diesen Strömungskanälen aufgrund des Abdeckelementes gezwungen sind, in radial weiter außen liegende Strömungskanäle auszuweichen.

Es kann zweckmäßig sein, das Abdeckelement so auszubilden, dass sämtliche, sich unmittelbar an dem Stützkern befindliche Strömungskanäle von dem Abdeckelement axial an der Abströmseite abgedeckt werden. Des Weiteren ist es vorteilhaft, dass nicht nur die unmittelbar benachbarten Strömungskanäle, sondern zumindest eine oder zwei sich in Radialrichtung anschließende weitere Lagen von Strömungskanälen von dem Abdeckelement verschlossen sind. Auf diese Weise kann an der Abströmseite ein Ringraum geschaffen werden, über den die Abströmung des gereinigten Fluids stattfindet, wobei der innen liegende Radius des Ringraums nur mit einer reduzierten Strömung versehen ist. Im Ringraum wird jedoch eine verstärkte, laminare Abströmung erreicht, die von einem Sensor mit reduziertem Messrauschen gemessen werden kann.

Das Abdeckelement kann auf verschiedene Weise an der Filtereinrichtung gehalten sein. Zum einen kommt ein Aufkleben des Abdeckelementes an der Stirnseite des Filterelementes in Betracht, und zwar entweder auf der Stirnseite des Stützkerns und/oder an der Stirnseite der Filterbahn, die das Filterelement bildet. Möglich ist auch eine Halterung des Abdeckelementes mithilfe von Halterippen an einem weiteren Bauteil der Filtereinrichtung, insbesondere an einem das Filterelement einfassenden Rahmen, wobei die Halterippen vorzugsweise einteilig mit dem Abdeckelement ausgeführt sind. Auch der Rahmen kann einteilig mit den Halterippen ausgeführt sein, so dass das Abdeckelement, die Halterippen und der am Filterelement umlaufende Rahmen ein gemeinsames, einteiliges Bauteil bilden, welches vorzugsweise aus Kunststoff besteht und insbesondere im Kunststoff-Spritzgussverfahren hergestellt wird.

Die sich zwischen Abdeckelement und Rahmen erstreckenden Halterippen können mit der Mittelebene durch den Stützkern einen Winkel einnehmen, der von 90° abweicht, so dass die Halterippen sich zwar mit radialer Komponente entlang der Stirnseite des Filterelementes erstrecken, jedoch eine zusätzliche Komponente in Umfangsrichtung aufweisen. Grundsätzlich ist es aber auch möglich, dass die Halterippen mit der Mittelebene durch den Stützkern einen 90°-Winkel einschließen.

Des Weiteren ist es zweckmäßig, die Halterippen strömungsgünstig zu konsturieren, um die axiale Abströmung des gereinigten Fluids positiv zu beeinflussen. Auf diese Weise kann insbesondere eine verbesserte laminare Abströmung des Fluids erreicht werden. Unerwünschte Verwirbelungen werden reduziert. Die strömungsgünstige Gestaltung der Halterippen bezieht sich zum einen auf deren Querschnitt, zum andern aber auch auf den Verlauf der Halterippen zwischen Abdeckelement und außen liegendem, das Filterelement einfassenden Rahmen.

Eine zusätzliche Verbesserung der Abströmung kann über ein auf die Stirnseite des Filterelementes aufzusetzendes Verlängerungsteil erzielt werden, welches auf das Abdeckelement sowie den Rahmen an der Außenseite des Filterelementes und gegebenenfalls auch auf die Halterippen axial aufgesetzt wird. Das Verlängerungsteil ist ebenfalls strömungsoptimiert gestaltet und verlängert die sich über die Abström-Stirnseite des Filterelementes axial erhebenden Bauteile in Achsrichtung.

Das Filterelement weist beispielhaft einen ovalen Querschnitt auf, wobei grundsätzlich auch runde Querschnitte in Betracht kommen.
In einer Ausführungsform weist das Filterelement einen ovalen Querschnitt auf In einer weiteren Ausführungsform überdeckt das Abdeckelement den Stützkern an dessen axialer Stirnseite vollständig.
In einer weiteren Ausführungsform ist im Bereich der Abströmseite ein strömungsoptimiertes Verlängerungsteil auf die Stirnseite des Filterelements aufgesetzt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 eine perspektivische Ansicht auf eine als Luftfilter für Brennkraftmaschinen ausgebildete Filtereinrichtung, mit einem spiralförmig gewickelten Filterelement, das im Zentrum einen von einem Abdeckelement überdeckten Stützkern aufweist, wobei das Abdeckelement über Halterippen mit einem am Filterelement umlaufenden Rahmen verbunden ist,

Fig. 2 ein weiterer Luftfilter, bei dem auf die Abströmseite ein zusätzliches, strömungsoptimiertes Verlängerungsteil axial aufgesetzt ist,

Fig. 3 in schematischer Darstellung ein Ansaugmodul in einer Brennkraftmaschine mit dem in den Ansaugkanal eingesetzten Luftfilter und einem stromab des Luftfilters angeordneten Luftmassenmesser,

Fig. 4 eine aus einer gewellten und einer ebenen Lage bestehende Filterbahn, aus der durch Wickeln das Filterelement gebildet wird,

Fig. 5 zwei aufeinander gelegte Filterbahnen mit zwischenliegenden Strömungskanälen,

Fig. 6 eine Draufsicht auf die spiralförmig zu einem Filterelement gewickelte Filterbahn, in deren Zentrum sich ein Stützkern befindet,

Fig. 7 das gewickelte Filterelement im Längsschnitt mit einer Mehrzahl von Strömungskanälen für das zu reinigende Fluid, wobei die Strömungskanäle an gegenüberliegenden axialen Stirnseiten wechselseitig offen bzw. verschlossen sind,

Fig. 8 einen Schnitt durch das Filterelement mit einem durch das Zentrum geführten Stützkern und einem an der Abströmseite angeordneten Abdeckelement, welches eine größere Breite als der Stützkern aufweist,

Fig. 9 eine Draufsicht auf ein ovales Filterelement mit einem Abdeckelement, welches über Halterippen an dem umlaufenden Rahmen des Filterelementes gehalten ist,

Fig. 10 einen Schnitt gemäß Schnittlinie X-X aus Fig. 9,

Fig. 11 eine Draufsicht auf eine weitere Filtereinrichtung, bei der die Stützrippen in einem 90°-Winkel zu einer Mittelebene durch das Abdeckelement geführt sind,

Fig. 12 eine Draufsicht auf eine weitere Filtereinrichtung, bei der das Abdeckelement unmittelbar mit dem Stützrahmen und/oder den Stirnkanten des Filterelementes verbunden ist,

Fig. 13 eine Schnittdarstellung gemäß Schnittlinie XIII-XIII aus Fig. 12,

Fig. 14 eine Draufsicht auf eine weitere Filtereinrichtung, bei der das Abdeckelement mit einer axial überstehenden Verstärkungsrippe versehen ist,

Fig. 15 eine Schnittdarstellung gemäß Schnittlinie XV-XV aus Fig. 14,

Fig. 16 ein Schaubild mit dem Verlauf von Rauschkurven in Abhängigkeit des Luftmassenstromes durch das Filterelement für verschiedene Ausführungsvarianten der Filtereinrichtung.

In den Figuren sind gleiche Bauteile mit gleichen Bezugszeichen versehen.

### Ausführungsform(en) der Erfindung

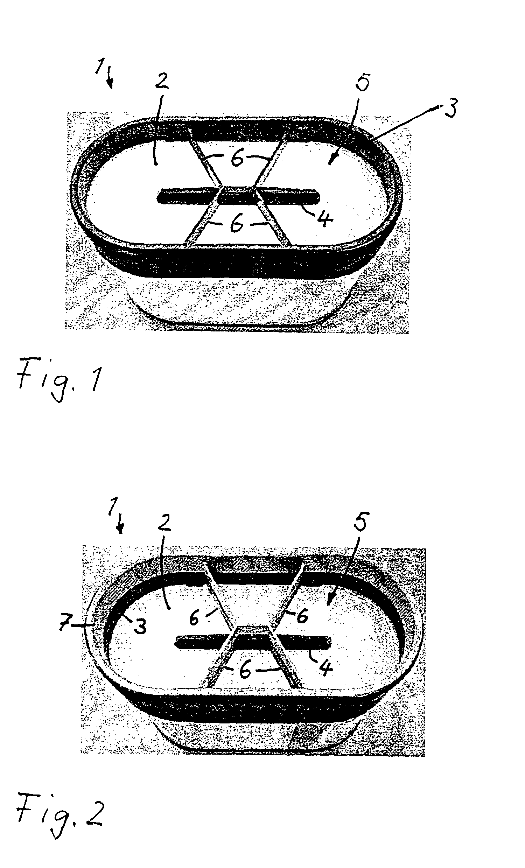

Bei der in Fig. 1 dargestellten Filtereinrichtung 1 handelt es sich um einen Luftfilter, der im Ansaugtrakt einer Brennkraftmaschine zur Filtration der den Zylindern zuzuführenden Verbrennungsluft eingesetzt wird. Die Filtereinrichtung 1 umfasst ein im Querschnitt ovalförmiges Filterelement 2, welches als Filterbahn ausgeführt ist, die um einen zentralen Stützkern spiralförmig aufgewickelt ist. Die Durchströmung des Filterelementes 2 erfolgt axial, die dargestellte Stirnseite des Filterelementes 2 stellt die Abströmseite 5 dar, über die das gereinigte Fluid das Filterelement verlässt.

Das Filterelement 2 ist von einem Rahmen 3 eingefasst, der sich an der Außenseite des Filterelementes 2 ringförmig erstreckt und sowohl in Radialrichtung als auch in Axialrichtung über das Filterelement 2 im Bereich der Abströmseite 5 übersteht. Der Rahmen 3 kann Träger eines Dichtungselementes sein, um die Roh- bzw. Anströmseite von der Rein- bzw. Abströmseite des Filterelementes im montierten Zustand der Filtereinrichtung zu separieren.

An der Abströmseite 5 weist das Filterelement 2 auf der Stirnseite ein Abdeckelement 4 auf, welches über winklig angeordnete Stütz- bzw. Halterippen 6 mit dem umlaufenden Rahmen 3 verbunden ist. Zweckmäßigerweise sind das Abdeckelement 4, die Halterippen 6 sowie der Rahmen 3 jeweils als Kunststoffbauteile ausgeführt, welche bevorzugt im Kunststoff-Spritzgussverfahren hergestellt werden. Hierbei kann es zweckmäßig sein, das Abdeckelement 4, die Halterippen 6 sowie den Rahmen 3 als einteiliges Kunststoffbauteil auszuführen.

Das Abdeckelement 4 befindet sich in der Mitte der Stirnseite des Filterelementes 2 und erstreckt sich in Längsrichtung des oval geformten Filterelementes. Das Abdeckelement 4 liegt auf dem Stützkern auf, um den die Filterbahn des Filterelementes spiralförmig gewickelt ist. Das Abdeckelement 4 deckt jedoch nicht nur den Stützkern axial ab, sondern zusätzlich auch noch mindestens eine unmittelbar zum Stützkern benachbarte Lage von Strömungskanälen, die sich in Achsrichtung erstrecken und durch die das zu filtrierende Fluid strömt. Aufgrund der Abdeckung der stirnseitigen Enden der unmittelbar benachbart zum Stützkern verlaufenden Strömungskanäle ist ein Strömungsaustritt des gereinigten Fluids über diese Kanäle unterbunden, so dass das Fluid die radialen Wandungen der Strömungskanäle nach außen durchdringen muss, bis ein an der Abströmseite 5 stirnseitig geöffneter Strömungskanal erreicht ist, über den das Fluid axial austreten kann. Auf diese Weise wird eine Vergleichmäßigung der Abströmung des gereinigten Fluids erzielt.

Das Abdeckelement 4 ist als länglicher Abdeckkörper ausgeführt, von dessen Seiten ausgehend sich die winklig angeordneten Halterippen 6 zum außen liegenden Rahmen 3 erstrecken. Die Halterippen 6 nehmen gegenüber der Längsachse des Abdeckelementes 4, welche zugleich in der Längsmittelebene des Stützkörpers liegt, einen Winkel ein, der zwischen 0° und 90° liegt. Im Ausführungsbeispiel beträgt der Winkel etwa 60°. An jeder Seite des Abdeckelementes 4 sind zwei Halterippen 6 angeordnet, die einen sich nach außen öffnenden Winkel einschließen.

Im Ausführungsbeispiel gemäß Fig. 2 ist die Filtereinrichtung 1 identisch wie diejenige aus Fig. 1 aufgebaut, jedoch ist an der Abströmseite 5 ein zusätzliches axiales Verlängerungsteil 7 aufgesetzt. Das axiale Verlängerungsteil 7 hat die Funktion, die Abströmung über die Abströmseite 5 strömungstechnisch zu optimieren. Das Verlängerungsteil 7 besteht aus einem umlaufenden Rahmen, der auf den Rahmen 3 aufgesetzt wird, welcher unmittelbar mit dem Filterelement 2 verbunden ist. Darüber hinaus weist das Verlängerungsteil 7 Rippen auf, die an die Halterippen 6 angepasst sind und unmittelbar auf diesen aufliegen. Aufgrund dieser Ausführung des Verlängerungsteils 7 wird die freie Querschnittsfläche an der Abströmseite 5 durch das Verlängerungsteil nicht beeinträchtigt. Zugleich werden Verwirbelungen an der Abströmseite reduziert und es wird die Ausbildung einer laminaren Strömung unterstützt.

Auch die Halterippen 6 sowie gegebenenfalls das Abdeckelement 4 können strömungsgünstig konturiert sein, um eine laminare Abströmung zu verbessern.

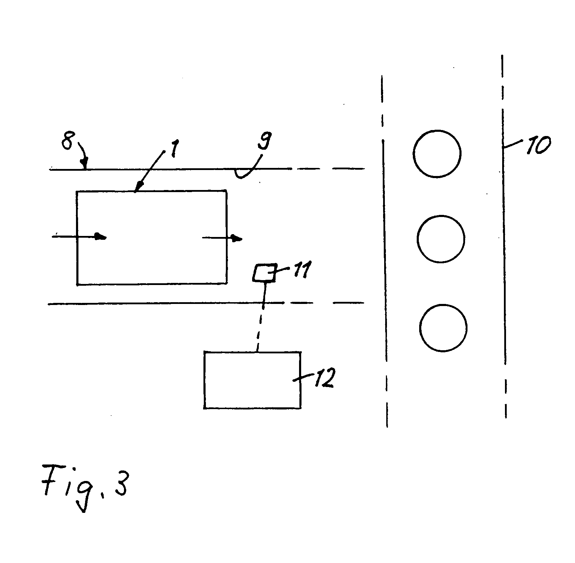

In Fig. 3 ist in schematischer Weise ein Ausschnitt aus einem Ansaugtrakt einer Brennkraftmaschine 10 dargestellt. In einem Ansaugmodul 8 befindet sich ein Ansaugkanal 9, in den die Filtereinrichtung 1 zur Filtration der in Pfeilrichtung herangeführten Verbrennungsluft integriert ist. Stromab der Filtereinrichtung 1 befindet sich in dem Ansaugkanal 9 ein Sensor 11 zur Ermittlung der Durchflussrate der Verbrennungsluft, beispielsweise ein Luftmassenmesser. Die Sensorsignale des Sensors 11 werden an eine Auswerteeinheit 12 übertragen.

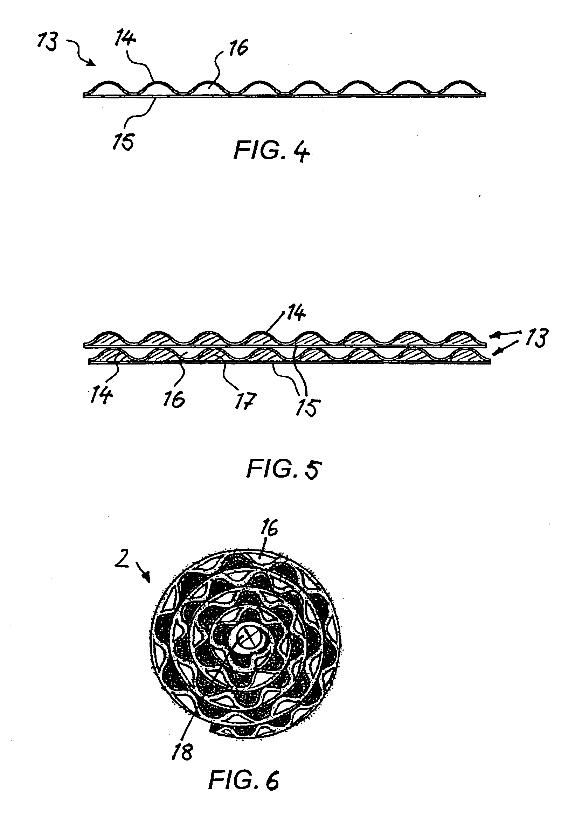

In Fig. 4 ist eine einzelne Filterbahn 13 im eben ausgebreiteten Zustand dargestellt, aus der das Filterelement hergestellt wird. Die Filterbahn 13 besteht aus einer gewellten Filterlage 14 und und einer ebenen Filterlage 15, wobei die beiden Filterlagen 14 und 15 miteinander verbunden, beispielsweise verklebt sind. Aufgrund der Wellenform der Filterlage 14 sind zwischen den Filterlagen 14 und 15 Strömungskanäle 16 gebildet, durch die das zu filtrierende gasförmige Fluid geleitet wird.

In Fig. 5 sind zwei Filterbahnen 13 in übereinander gelegten Zustand dargestellt. Die Filterbahnen 13 sind identisch aufgebaut und bestehen jeweils aus einer gewellten Filterlage 14 und einer hiermit verklebten ebenen Filterlage 15. Fig. 5 stellt einen Schnitt durch den wandseitigen Bereich benachbart zur Stirnseite dar, an welchem Klebstoffraupen im fertig gewickelten Zustand des Filterelementes sich in Umfangsrichtung erstrecken, so dass die Strömungskanäle mit Klebstoff 17 axial stirnseitig verschlossen sind. Die Klebstoffraupe verschließt die Strömungskanäle, welche zwischen gewellter Filterlage und ebener Filterlage 15 jeweils einer Filterbahn 13 gebildet sind. Aufgrund der Wellenform sind weitere Strömungskanäle 16 zwischen der gewellten Filterlage 14 der ersten Filterbahn und der ebenen Filterlage 15 der zweiten Filterbahn gebildet; diese Strömungskanäle 16 sind nicht mit Klebstoff verschlossen. Auf diese Weise werden in Längsrichtung der Filterbahn 13 gesehen wechselseitig offene und geschlossene stirnseitige Strömungskanäle gebildet.

In Fig. 6 ist eine Draufsicht auf das spiralförmig gewickelte Filterelement 2 mit wechselseitig offenen und geschlossenen Führungskanälen 16 dargestellt. Im Inneren des Filterelementes 2 befindet sich ein Stützkern 18, der dem Filterelement 2 zusätzliche Stabilität verleiht. Die Filterbahn des Filterelementes 2 ist spiralförmig um den Stützkern 18 gewickelt, wobei die unmittelbar an dem Stützkern 18 anliegenden Abschnitte der Filterbahn zweckmäßigerweise an den Stützkern angeklebt sind.

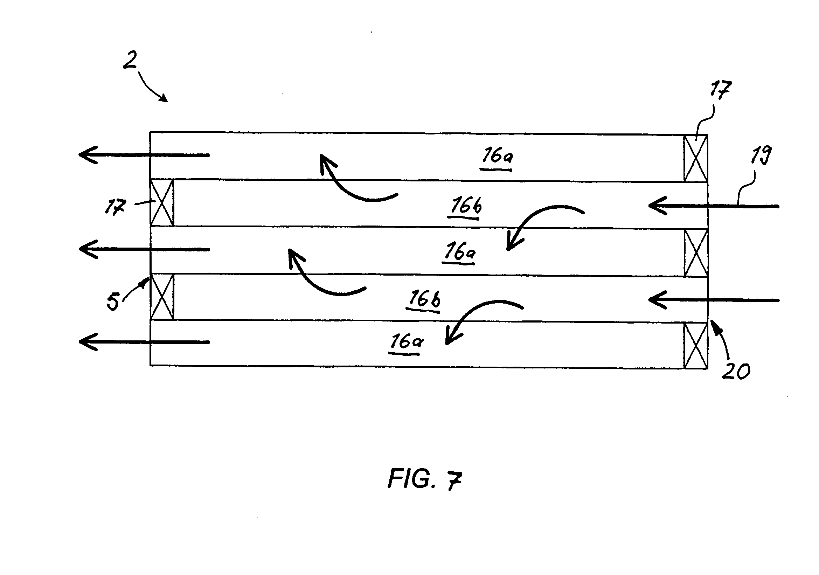

In Fig. 7 ist das Filterelement 2 dargestellt, das wie mit den Pfeilen angegeben in Durchströmrichtung 19 von dem Fluid durchströmt wird. Das zu reinigende Fluid strömt axial an der Anströmseite 20 in die Strömungskanäle 16a, 16b ein und verlässt das Filterelement 2 an der axial gegenüberliegenden Seite über die Abströmseite 5.

Die unmittelbar benachbart zueinander liegenden Strömungskanäle 16a und 16 b sind wechselseitig verschlossen bzw. geöffnet. Die Strömungskanäle 16a sind an der Anströmseite 20 von Klebstoff 17 verschlossen und an der Abströmseite 5 offen ausgebildet. Die Strömungskanäle 16b sind dagegen an der Anströmseite 20 offen ausgeführt und an der Abströmseite 5 über Klebstoff 17 verschlossen. Über diese an gegenüberliegenden axialen Stirnseiten wechselseitig offene bzw. verschlossene Ausführung ist sichergestellt, dass kein Strömungskanal axial durchgehend ausgebildet ist, so dass das über die Anströmseite 20 in das Filterelement eingetretene Fluid gezwungen ist, die Wandungen jedes Strömungskanals radial zu durchdringen und in den benachbarten Strömungskanal auszuweichen, über den eine axiale Abströmung möglich ist.

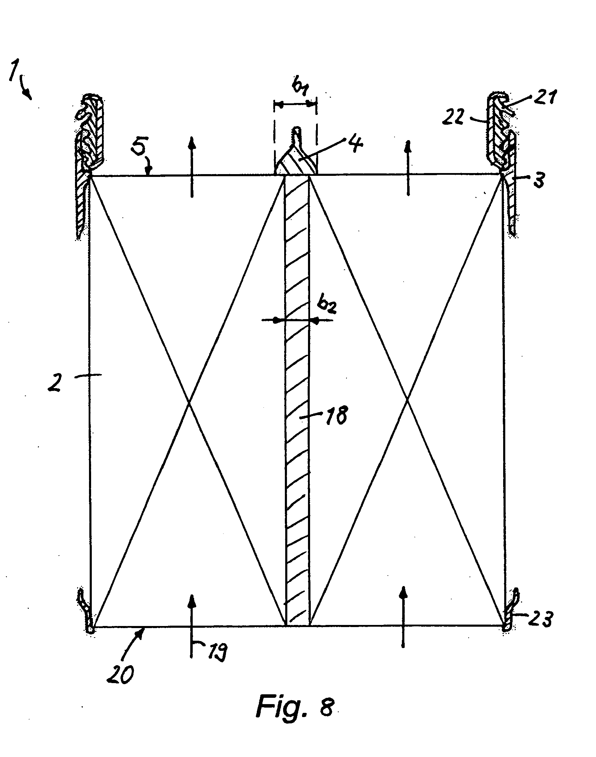

Wie Fig. 8 zu entnehmen, ist das Abdeckelement 4 in Querrichtung gesehen, also quer zur Durchströmrichtung 19, mit einer Breite b1 versehen, die größer ist als die Breite b2 des Stützkerns 18, der von dem Abdeckelement 4 an der Abströmseite 5 überdeckt wird. Aufgrund der größeren Breite des Abdeckelementes 4 im Verhältnis zum Stützkern 18 werden Strömungskanäle, welche im Filterelement 2 in unmittelbarer Nachbarschaft zu den Außenwänden des Stützkerns 18 gebildet sind, im Bereich der Abströmseite 5 axial verschlossen, auch wenn diese Strömungskanäle an sich offen ausgebildet sind. Hierdurch ist gewährleistet, dass über unmittelbar am Stützkern 18 anliegende Strömungskanäle keine axiale Abströmung erfolgt.

Des Weiteren ist Fig. 8 zu entnehmen, dass am Rahmen 3, welcher im Bereich der Abströmseite 5 am Filterelement 2 angeordnet ist, ein Dichtelement 21 anliegt, welches an einem Bauteil 22 gehalten ist. Das Bauteil 22 ist zweckmäßigerweise Bestandteil eines Gehäuses, beispielsweise des Ansaugmoduls. Über das Dichtelement 21 ist eine strömungsdichte Separierung von Rohseite und Reinseite des Filterelementes 2 gewährleistet.

Auch im axial gegenüberliegenden Bereich an der Anströmseite 20 befindet sich ein umlaufender Rahmen 23 am Filterelement 2, der beispielsweise zur Abstützung des Filterelementes 2 in Einbaulage genutzt wird.

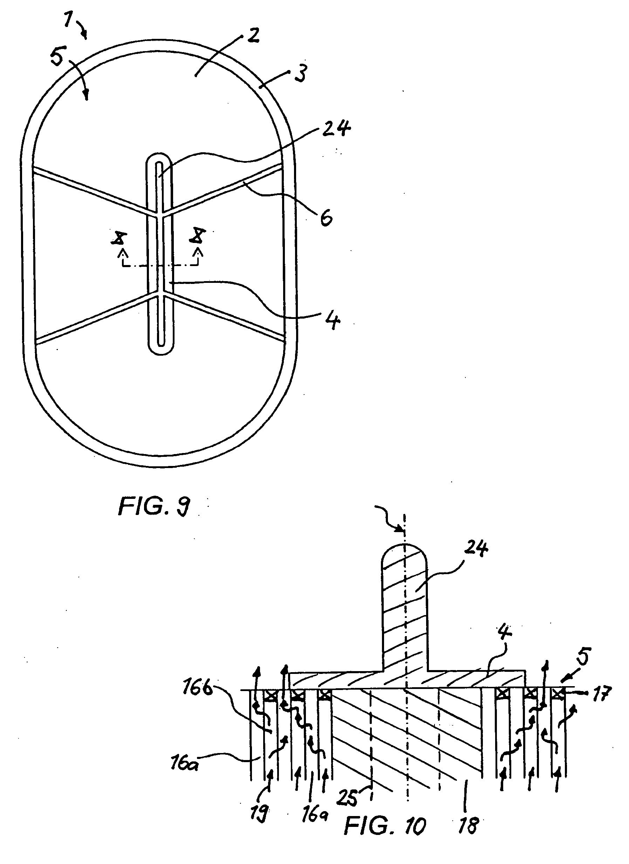

Wie Fig. 9 zu entnehmen, ist das Abdeckelement 4 als länglicher Körper ausgebildet, der sich in Richtung der Längsseite des ovalförmigen Querschnittes des Filterelementes 2 an der Abströmseite 5 erstreckt. Auch der Stützkern ist als länglicher Körper ausgebildet, wobei das Abdeckelement 4 die Stirnseite des Stützkörpers an der Abströmseite 5 vollständig überdeckt, also in beide Querrichtungen, d.h. in Richtung der längeren und in Richtung der kürzeren Erstreckung des Ovals. Das Abdeckelement 4, das über die Halterippen 6 mit dem umlaufenden Rahmen 3 verbunden ist und von diesem getragen wird, ist mit einer axial überstehenden Verstärkungsrippe 24 versehen, die sich ebenfalls in Längsrichtung des Abdeckelementes erstreckt.

In Fig. 10 ist eine Schnittdarstellung gemäß Schnittlinie X-X aus Fig. 9 dargestellt. Das Abdeckelement 4 deckt nicht nur die axiale Stirnseite des Stützkerns 18 im Bereich der Abströmseite 5 ab, sondern darüber hinaus auch noch drei Lagen von benachbart zur Außenseite des Stützkerns 18 verlaufenden Strömungskanälen 16a, 16b. Dadurch sind auch die an sich an der axialen Abströmseite offen ausgebildeten Strömungskanäle 16a von dem Abdeckelement 4 strömungsdicht verschlossen, so dass Fluid, welche sich in diesen Strömungskanälen 16a befindet, radial nach außen durch die Wandungen der Strömungskanäle hindurchtreten muss, bis ein Strömungskanal 16a erreicht ist, der an der axialen Stirnseite offen und nicht mehr von dem Abdeckelement 4 überdeckt ist.

Der Stützkern 18 kann, wie mit gestrichelter Linie 25 dargestellt, auch gegebenenfalls als Hohlkörper ausgebildet sein.

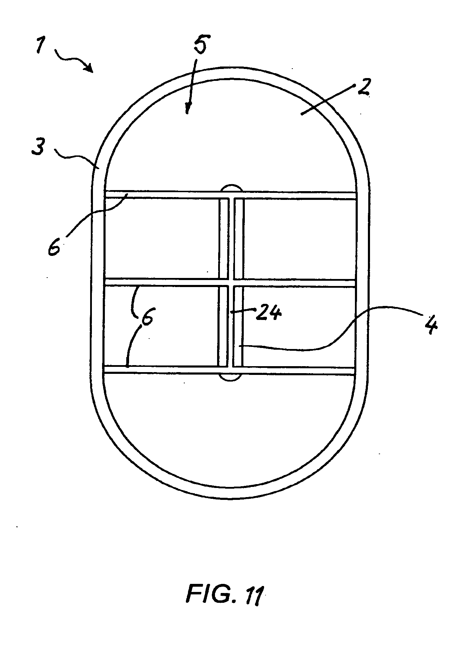

Das Ausführungsbeispiel gemäß Fig. 11 unterscheidet sich von demjenigen nach Fig. 9 dadurch, dass die Halterippen 6, die das Abdeckelement 4 mit dem umlaufenden Rahmen 3 verbinden, in einem 90°-Winkel zur Längsmittelebene durch das Abdeckelement 4 verlaufen. Im Ausführungsbeispiel nach Fig. 9 sind die Halterippen 6 dagegen winklig in einem Winkelbereich von etwa 60° angeordnet.

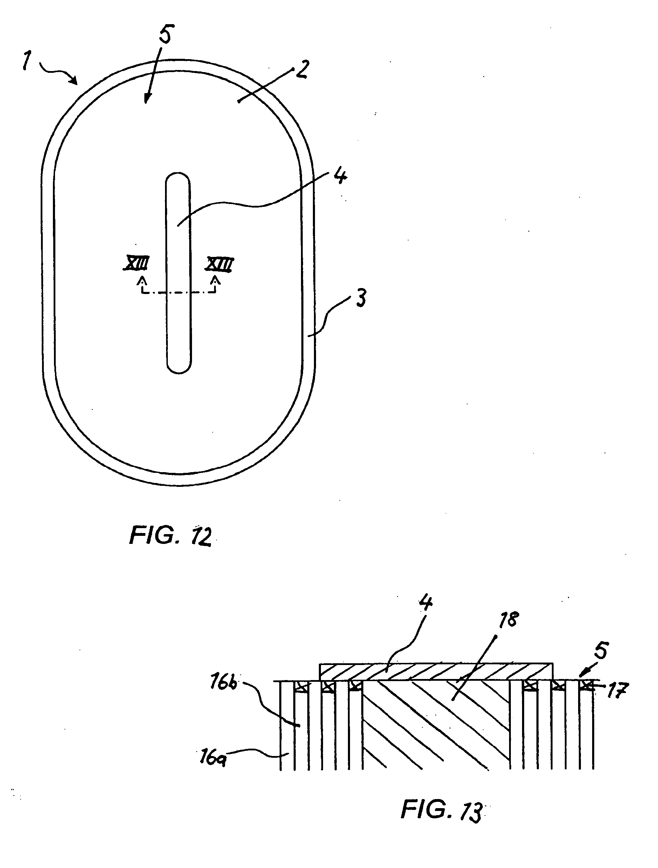

Im Ausführungsbeispiel gemäß Fig. 12 und 13 ist das Abdeckelement 4 nicht über Halterippen mit dem umlaufenden Rahmen 3 verbunden, sondern mit dem Stützkern 18 verklebt. Gegebenenfalls kommt auch eine Verklebung mit den axialen Stirnseiten des Filterelementes 2 im Bereich der Abströmseite 5 in Betracht. Halterippen sind bei Fig. 12 und 13 nicht vorgesehen.

Das Abdeckelement 4 ist plattenförmig ausgebildet, es ist keine axial überstehende Verstärkungsrippe an dem Abdeckelement 4 vorgesehen.

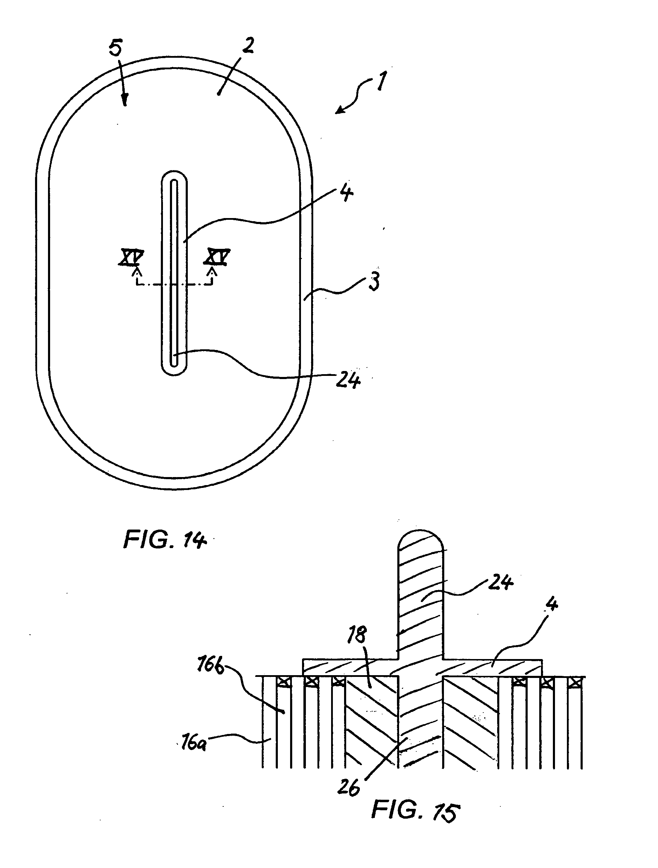

Auch im Ausführungsbeispiel gemäß den Fig. 14 und 15 wird auf Halterippen zwischen dem Abdeckelement 4 und dem umlaufenden Rahmen 3 verzichtet. Das Abdeckelement 4 ist mit einer axial nach außen überstehenden Verstärkungsrippe 24 versehen. Außerdem ist das Abdeckelement 4 auf der dem Filterelement zugewandten Seite einteilig mit einem Vorsprung 26 ausgestattet, der in eine zentrale Ausnehmung einragt, welche in den Stützkern 18 eingebracht ist. Der Vorsprung 26 kann mit dem Stützkern 18 verklebt werden, ebenso ist eine Verklebung zwischen der dem Filterelement zugewandten Seite des Abdeckelementes 4 und der Stirnseite des Stützkerns 18 sowie gegebenenfalls den stirnseitigen Enden der Strömungskanäle möglich.

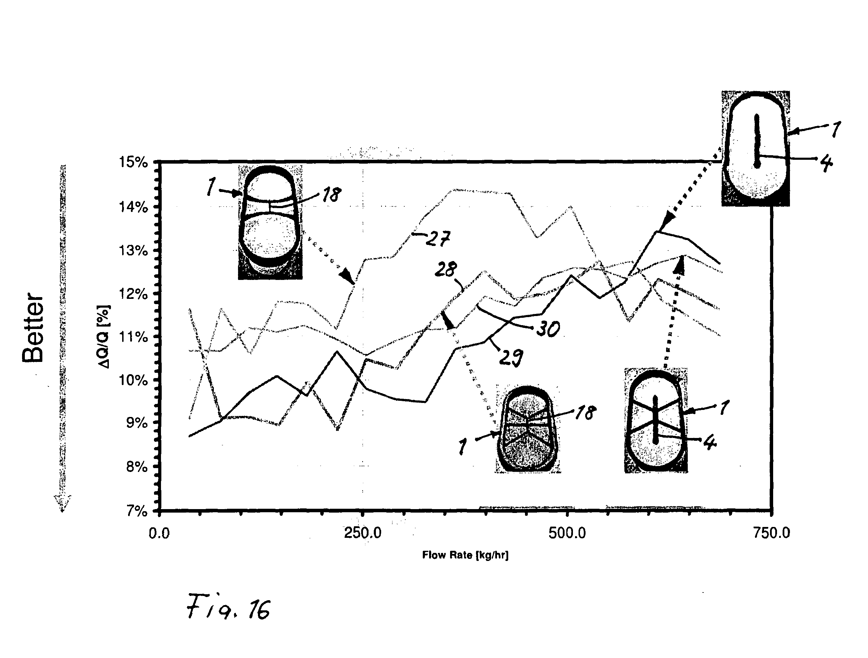

In dem Diagramm gemäß Fig. 16 sind Rauschkurven für verschiedene Ausführungsvarianten von Filtereinrichtungen 1 dargestellt. Die Rauschkurven 27 bis 30 bezeichnen das Rauschverhalten des aus dem Filterelement ausgetretenen Fluids in Abhängigkeit von dem Massenstrom, der durch das Filterelement durchgesetzt wird. Das Rauschverhalten ist gekennzeichnet durch die Schwankungsbreite ΔQ bezogen auf den Massenstrom Q. Je geringer das Rauschverhalten ist, umso höher ist die Qualität des Signals, welches vom stromab des Filterelementes angeordneten Luftmassenmesser aufgenommen wird.

Die Rauschkurven 27 und 28 gelten für Filtereinrichtungen 1, die nur in dem Filterelement einen Stützkern 18 aufweisen, jedoch kein Abdeckelement, das die Stirnseite des Stützkerns 18 und sich unmittelbar an den Stützkern anschließende Strömungskanäle an der Abströmseite überdeckt. Die Rauschkurven 29 und 30 gelten dagegen für Filtereinrichtungen 1, die mit einem derartigen Abdeckelement 4 ausgestattet sind.

Insbesondere bei niedrigen und mittleren Massenströmen zeigt sich anhand der Rauschkurven 27 und 28, dass sich ein Fehlen des Abdeckelementes in einer höheren Rauschkurve 27 bzw. 28 und damit mit einem größeren Rauschen bzw. einer schlechteren Signalqualität bemerkbar macht. Die beiden Ausführungsvarianten mit dem Abdeckelement 4, die durch die Rauschkurven 29 und 30 dargestellt sind, weisen dagegen bis in höhere Massenstrombereiche einen niedrigeren Verlauf auf und damit ein besseres Rauschverhalten.

## Patentansprüche

1. Filtereinrichtung zur Filtration gasförmiger Fluide, insbesondere Luftfilter in Brennkraftmaschinen (10), mit einem Filterelement (2), das eine um einen Stützkern (18) spiralförmig gewickelte Filterbahn (13) aufweist, welche parallel verlaufende Strömungskanäle (16) für das Fluid aufweist, wobei benachbarte Strömungskanäle (16) an gegenüberliegenden axialen Stirnseiten wechselseitig offen bzw. verschlossen sind, **dadurch gekennzeichnet, dass** unmittelbar zum Stützkern (18) benachbarte Strömungskanäle (16), die an der axialen Abströmseite (5) offen sind, von einem zusätzlichen, mit einem Bauteil der Filtereinrichtung (1) verbundenen Abdeckelement (4) abgedeckt sind, wobei alle unmittelbar zum Stützkern (18) benachbarten Strömungskanäle (16) an der axialen Abströmseite (5) des Filterelements (2) von dem Abdeckelement (4) abgedeckt sind, derart, dass die Abströmung über die direkt an dem Stützkern gelegenen Abströmkanäle vollständig unterbunden ist.

2. Filtereinrichtung nach Anspruch 1, **dadurch gekennzeichnet, dass** das Abdeckelement (4) die an der axialen Abströmseite (5) offenen Strömungskanäle (16) strömungsdicht abdeckt.

3. Filtereinrichtung nach einem der Ansprüche 1 bis 2, **dadurch gekennzeichnet, dass** das Abdeckelement (4) über Halterippen (6) mit einem umlaufenden, das Filterelement (2) einfassenden Rahmen (3) verbunden ist.

4. Filtereinrichtung nach Anspruch 3, **dadurch gekennzeichnet, dass** die Halterippen (6) gegenüber einer Mittelebene durch den Stützkern (18) winklig verlaufen.

5. Filtereinrichtung nach Anspruch 4, **dadurch gekennzeichnet, dass** die Halterippen (6) mit der Mittelebene durch den Stützkern (18) einen Winkel ungleich 90° einschließen.

6. Filtereinrichtung nach Anspruch 4, **dadurch gekennzeichnet, dass** die Halterippen (6) mit der Mittelebene durch den Stützkern (18) einen rechten Winkel einschließen.

7. Filtereinrichtung nach einem der Ansprüche 3 bis 6, **dadurch gekennzeichnet, dass** die Halterippen (6) strömungsgünstig konturiert sind.

8. Filtereinrichtung nach einem der Ansprüche 3 bis 7, **dadurch gekennzeichnet, dass** das Abdeckelement (4), die Halterippen (6) und der Rahmen (3) als einteiliges Bauteil ausgebildet sind, insbesondere als Kunststoff-Spritzgussbauteil.

9. Filtereinrichtung nach einem der Ansprüche 1 bis 8, **dadurch gekennzeichnet, dass** das Abdeckelement (4) auf die Stirnseite des Filterelements (2) aufgeklebt ist.

10. Filtereinrichtung nach einem der Ansprüche 1 bis 9, **dadurch gekennzeichnet, dass** das Abdeckelement (4) einteilig mit dem Stützkern (18) ausgebildet ist.

11. Filtereinrichtung nach einem der Ansprüche 1 bis 10, **dadurch gekennzeichnet, dass** die Filterbahn (13) mit dem Stützkern (18) verklebt ist.

12. Filtereinrichtung nach einem der Ansprüche 1 bis 11, **dadurch gekennzeichnet, dass** das Abdeckelement (4) mit einer axial überstehenden Verstärkungsrippe (24) versehen ist.

13. Ansaugmodul (8) in einer Brennkraftmaschine (10) mit einer Filtereinrichtung (1) nach einem der Ansprüche 1 bis 12 und einem stromab der Filtereinrichtung (1) angeordneten Luftmassenmesser.

## Claims

1. Filtering device for filtering gaseous fluids, in particular air filters in internal combustion engines (10), with a filter element (2) that features around a supporting core (18) a spirally wound filter belt (13) which features parallel running flow channels (16) for the fluid, adjacent flow channels (16) at opposing axial front sides being alternately open or closed, **characterized in that** directly to the supporting core (18) adjacent flow channels (16) which are open at the axial off-flow side (5) are covered by an additional cover element (4) connected with a component of the filtering device (1), all directly to the supporting core (18) adjacent flow channels (16) being covered at the axial off-flow side (5) of the filter element (2) by the cover element (4) such that the outflow via the directly at the supporting core disposed outflow channels is completely prevented.

2. Filtering device according to claim 1, **characterized in that** the cover element (4) covers in a flow-tight manner the flow channels (16) which are open at the axial off-flow side (5).

3. Filtering device according to one of the claims 1 to 2, **characterized in that** the cover element (4) is connected via retaining ribs (6) with a circumferential frame (3) surrounding the filter element (2).

4. Filtering device according to claim 3, **characterized in that** the retaining ribs (6) in relation to a center plane run through the supporting core (18) angularly.

5. Filtering device according to claim 4, **characterized in that** the retaining ribs (6) with the center plane through the supporting core (18) form an angle unequal to 90°.

6. Filtering device according to claim 4, **characterized in that** the retaining ribs (6) with the center plane through the supporting core (18) form a right angle.

7. Filtering device according to one of the claims 3 to 6, **characterized in that** the retaining ribs (6) are contoured in a manner which is favorable to flow.

8. Filtering device according to one of the claims 3 to 7, **characterized in that** the cover element (4), the retaining ribs (6) and the frame (3) are designed as one-piece component, in particular as plastic injection molded part.

9. Filtering device according to one of the claims 1 to 8, **characterized in that** the cover element (4) is glued to the front side of the filter element (2).

10. Filtering device according to one of the claims 1 to 9, **characterized in that** the cover element (4) is designed as one-piece with the supporting core (18).

11. Filtering device according to one of the claims 1 to 10, **characterized in that** the filter belt (13) is glued with the supporting core (18).

12. Filtering device according to one of the claims 1 to 11, **characterized in that** the cover element (4) is provided with an axially protruding reinforcing rib (24).

13. Intake module (8) in an internal combustion engine (10) with a filtering device (1) according to one of the claims 1 to 12 and an air-flow meter disposed downstream of the filtering device (1).

## Revendications

1. Dispositif de filtration pour la filtration de fluides gazeux, notamment filtre à air dans des moteurs à combustion interne (10), avec un élément filtrant (2) présentant une bande filtrante (13) qui est enroulée en forme de spirale autour d'une âme d'appui (18) et qui présente des canaux d'écoulement (16) parallèles pour le fluide, des canaux d'écoulement (16) voisins situés sur les faces frontales axiales opposées étant ouverts ou fermés en alternance, **caractérisé en ce que** des canaux d'écoulement (16) directement voisins de l'âme d'appui (18) qui sont ouverts du côté de sortie (5) axial sont recouverts par un élément de couverture (4) supplémentaire et relié à un composant du dispositif de filtration (1), tous les canaux d'écoulement (16) directement voisins de l'âme d'appui (18) étant recouverts par l'élément de couverture (4) du côté de sortie (5) axial de l'élément filtrant (2) de sorte que la sortie soit totalement empêchée par les canaux d'écoulement situés à proximité directe de l'âme d'appui.

2. Dispositif de filtration selon la revendication 1, **caractérisé en ce que** l'élément de couverture (4) couvre, de manière étanche à l'écoulement, des canaux d'écoulement (16) ouverts du côté de sortie (5) axial.

3. Dispositif de filtration selon l'une des revendications 1 à 2, **caractérisé en ce que** l'élément de couverture (4) est relié par des nervures de support (6) à un cadre (3) circonférentiel encerclant l'élément filtrant (2)

4. Dispositif de filtration selon la revendication 3, **caractérisé en ce que** les nervures de support (6) sont angulaires par rapport à un plan médian à travers l'âme d'appui (18).

5. Dispositif de filtration selon la revendication 4, **caractérisé en ce que** les nervures de support (6) forment un angle autre que 90° avec le plan médian à travers l'âme d'appui (18).

6. Dispositif de filtration selon la revendication 4, **caractérisé en ce que** les nervures de support (6) forment un angle droit avec le plan médian à travers l'âme d'appui (18).

7. Dispositif de filtration selon l'une des revendications 3 à 6, **caractérisé en ce que** les nervures de support (6) sont dotées d'un contour favorable à l'écoulement.

8. Dispositif de filtration selon l'une des revendications 3 à 7, **caractérisé en ce que** l'élément de couverture (4), les nervures de support (6) et le cadre (3) sont réalisés en un bloc, notamment en tant que pièce moulée par injection en matière plastique.

9. Dispositif de filtration selon l'une des revendications 1 à 8, **caractérisé en ce que** l'élément de couverture (4) est collé sur la face frontale de l'élément filtrant (2).

10. Dispositif de filtration selon l'une des revendications 1 à 9, **caractérisé en ce que** l'élément de couverture (4) est formé en un bloc avec l'âme d'appui (18).

11. Dispositif de filtration selon l'une des revendications 1 à 10, **caractérisé en ce que** la bande filtrante (13) est collée à l'âme d'appui (18).

12. Dispositif de filtration selon l'une des revendications 1 à 11, **caractérisé en ce que** l'élément de couverture (4) est pourvu d'une nervure de renfort (24) en saillie en sens axial.

13. Module d'aspiration (8) dans un moteur à combustion interne (10) avec un dispositif de filtration (1) selon l'une des revendications 1 à 12 et avec un débitmètre d'air disposé en aval du dispositif de filtration (1).
